# EUROPÄISCHE PATENTSCHRIFT

(11) **EP 2 454 801 B1**
(45) Veröffentlichungstag und Bekanntmachung des Hinweises auf die Patenterteilung: **30.03.2016**
(21) Anmeldenummer: 10757044.2
(22) Anmeldetag: 21.09.2010
(51) Int. Cl.: H02K 9/08, H02K 5/10, H02K 9/19

(54) **ELEKTRISCHER GENERATOR**
ELECTRIC GENERATOR
GÉNÉRATEUR ÉLECTRIQUE

(30) Priorität: 21.10.2009 DE 102009050004
(43) Veröffentlichungstag der Anmeldung: 23.05.2012
(73) Patentinhaber: Voith Patent GmbH, 89522 Heidenheim (DE)
(72) Erfinder: KUNZ, Alexander, 89522 Heidenheim (DE); ZWARG, Günter, 14052 Berlin (DE); KÖDDING, Ludger, 89518 Heidenheim (DE); HENNING, Holger, 89537 Giengen (DE); HILDINGER, Thomas, 89522 Heidenheim (DE); WOLF, Markus, 89522 Heidenheim (DE)
(74) Vertreter: Dr. Weitzel & Partner
(86) Internationale Anmeldenummer: PCT/EP2010/005761
(87) Internationale Veröffentlichungsnummer: WO 2011/047761

(56) Entgegenhaltungen:
- DE-A1- 3 528 347
- NL-C- 37 774

## Beschreibung

Die Erfindung betrifft einen elektrischen Generator, insbesondere für eine Wasserkraftanlage mit einer Wasserturbine, die den Generator antreibt. Die Erfindung betrifft insbesondere das Kühlsystem des Generators.

Ein solcher Generator ist beispielsweise aus DE 10 2009 19 295 A1 bekannt geworden. In der DE 35 28 347 A1 wird ein flüssigkeitsgekühlter elektrischer Stromerzeuger beschrieben.

Ein Generator umfasst einen Rotor, ferner einen den Rotor umschließenden Stator. Dieser ist beispielsweise als Blechpaket ausgeführt. Rotor und Stator sind von einem Gehäuse umschlossen. Die Kühleinrichtung wird sowohl mit Luft als auch mit Wasser als mit Kühlmedium betrieben.

Hierzu weist das Gehäuse einen Einlass für Kühlwasser auf. Rotor und Stator enthalten Kanäle, durch die das Kühlwasser hindurchgeleitet werden kann. Das Kühlwasser tritt am Kühlwassereinlass ein, durchströmt die genannten Kanäle, und tritt wieder an einem Kühlwasserauslass aus dem Gehäuse aus.

In gleicher Weise wird Kühlluft durch einen Kühllufteinlass in das Gehäuse eingeleitet, durchströmt die im Generator enthaltenen Freiräume und umspült hierbei Rotor und Stator, heizt sich hierbei auf und tritt an einem Kühlluftauslass wieder aus dem Gehäuse aus.

Eine solche mit Kühlluft und Kühlwasser betriebene Kühleinrichtung ist problematisch. Die damit erzielte Kühlung reicht häufig nicht aus. Es kommt zu einer unzulässigen Erwärmung der beteiligten Bauteile des Generators, und daher gelegentlich zu dessen Ausfall.

Der Erfindung liegt die Aufgabe zugrunde, einen elektrischen Generator der eingangs genannten Bauart derart zu gestalten, dass die Kühlung effizienter und damit ausreichend wird, um sämtliche Bauteile des Generators unter der höchstzulässigen Temperatur zu halten. Ferner soll der mit dem Kühlen verbundene bauliche Aufwand verringert werden.

Diese Aufgabe wird mit einem elektrischen Generator gelöst, der die Merkmale von Anspruch 1 aufweist.

Demgemäß ist das Gehäuse des Generators geschlossen. Die Kühleinrichtung umfasst ausschließlich eine Wasserkühleinrichtung, somit keine Luftkühleinrichtung.

Der Erfinder hat erkannt, dass auf die Luftkühleinrichtung verzichtet werden kann, wenn das Gehäuse des Generators geschlossen ist. Er hat ferner hierfür die folgenden Grüne erkannt: Bei einem erfindungsgemäßen Generator heizt sich die vom Gehäuse umschlossene, Rotor und Stator umgebende Luft stark auf, stärker als bei konventionellen Generatoren, bei denen der Generator von Luft durchströmt ist. Es herrscht somit ein großer Temperaturgradient zwischen der Temperatur des Kühlwassers und der Temperatur der im Gehäuse eingeschlossenen Luft. Der Wärmeübergang von der Luft auf das Kühlwasser ist daher besonders günstig. Das Kühlwasser nimmt die in der Luft enthaltene Wärmemenge auf, und führt diese zuverlässig ab. Möglicherweise ist es hierbei zweckmäßig oder notwendig, den Durchsatz an Kühlwasser zu steigern. Dies ist jedoch kein Problem.

Die Vorteile, die sich aus der Erfindung ergeben, sind die Folgenden:
- Das allein mit Wasser betriebene Kühlsystem ist derart effizient, dass eine Überhitzung der eigentlichen Bauteile des Generators ausgeschlossen ist, und zwar auch bei großen Maschinen hoher Leitung, zum Beispiel ab 300 MVA.
- Da die Kühllufteinrichtung entfällt, sind auch die Investitionskosten viel geringer, als bei herkömmlichen Generatoren; es bedarf keiner Luftanschlüsse am Gehäuse sowie keiner Rohrleitungen für den Wärmeaustausch zwischen Wasser und Luft.
- Der Raumbedarf des Generators verringert sich ebenfalls.

Die Erfindung sowie der Stand der Technik sind anhand der Zeichnung näher erläutert. Darin ist im Einzelnen Folgendes dargestellt:
- Figur 1: zeigt in einem Axialschnitt einen erfindungsgemäßen Rotor in schematischer Darstellung.
- Figur 2: zeigt wiederum in einem Axialschnitt einen elektrischen Generator gemäß dem Stand der Technik.
- Figur 3: zeigt in einem Axialschnitt einen erfindungsgemäßen Rotor einer Schenkelpolmaschine.
- Figur 4: zeigt einen vergrößerten Ausschnitt einer Schenkelpolmaschine.

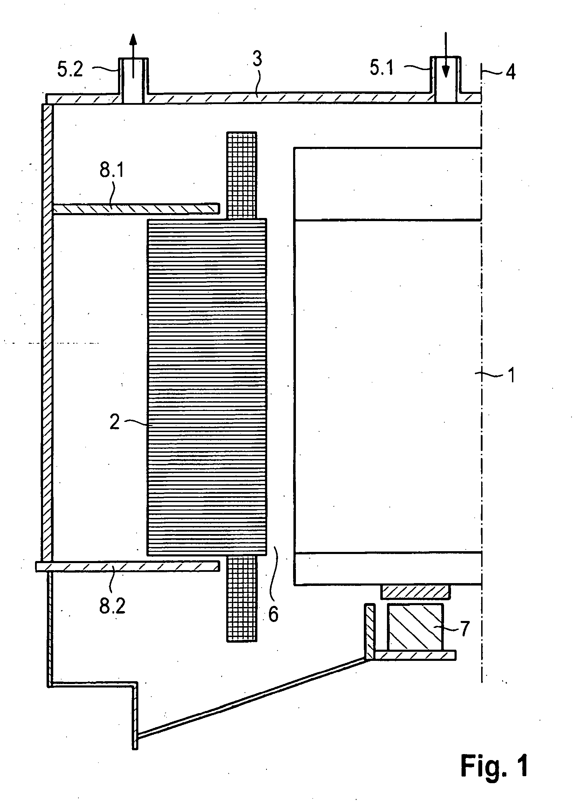

Der in Figur 1 gezeigte Generator umfasst einen Rotor 1, einen Stator 2 sowie ein Gehäuse 3. Die Welle ist nicht dargestellt, sondern lediglich die Drehachse 4.

Das gemäß der Erfindung wichtigste Element ist die Kühleinrichtung. Diese ist ausschließlich mit Wasser betrieben. Das Gehäuse 3 weist einen Wassereinlass 5.1 sowie einen Wasserauslass 5.2 auf. Der Verlauf des Kühlwassers ist nicht dargestellt. Es versteht sich jedoch, dass das Kühlwasser durch Kanäle in Rotor 1 und Stator 2 strömt, gegebenenfalls auch durch einen hier nicht gezeigten Wickelkopf.

Im Gehäuse ist Luft eingeschlossen. Siehe zum Beispiel den Luftspalt 6 zwischen Rotor 1 und Stator 2. Die eingeschlossene Luft heizt sich während des Betriebes stark auf, da kein externer Luft-Strömungskreislauf vorhanden ist, sondern lediglich ein externer Wasser-Strömungskreislauf. Aufgrund des hohen Temperaturgradienten zwischen Luft und Wasser findet ein sehr effizienter Wärmeübergang zwischen Luft und Wasser statt. Das Kühlwasser nimmt die Wärme mit und führt sie nach außen ab. Dort wird im Allgemeinen ein Wärmetauscher angeordnet sein, der die Temperatur des Kühlwassers absenkt.

Der Vollständigkeit halber wird noch auf weitere Bauteile des Generators verwiesen. So ist eine Bremse 7 vorgesehen, ferner zwei Druckplatten 8.1, 8.2.

Wenn hier von geschlossenem Gehäuse gesprochen wird, so bedeutet dies nicht, dass das Gehäuse 3 hermetisch gegen die äußere Umgebung abgeschlossen ist. Es können durchaus fertigungsbedingte Spalte vorhanden sein, die auch einen Lufteintritt und Luftaustritt erlauben. Jedoch ist der Durchsatz der Luft außerordentlich gering, sodass er keine Rolle spielt. Maßgeblich ist, dass die Hauptmenge der Luft in dem vom Gehäuse 3 umschlossenen Raum verbleibt. Die Leckage ist derart gering, dass kein nennenswerter Luftaustausch erfolgt. So wird beispielsweise noch nach einer Betriebsstunde jedenfalls mehr als 50 Prozent des im Gehäuse eingeschlossenen Luftvolumens vorhanden sein.

Das Gehäuse kann jeweils einen Lufteinlass und einen Luftauslass besitzen. Wenigstens einer dieser beiden sollte einstellbar oder regelbar sein, sodass eine definierte Luft-Leckage erzielbar ist.

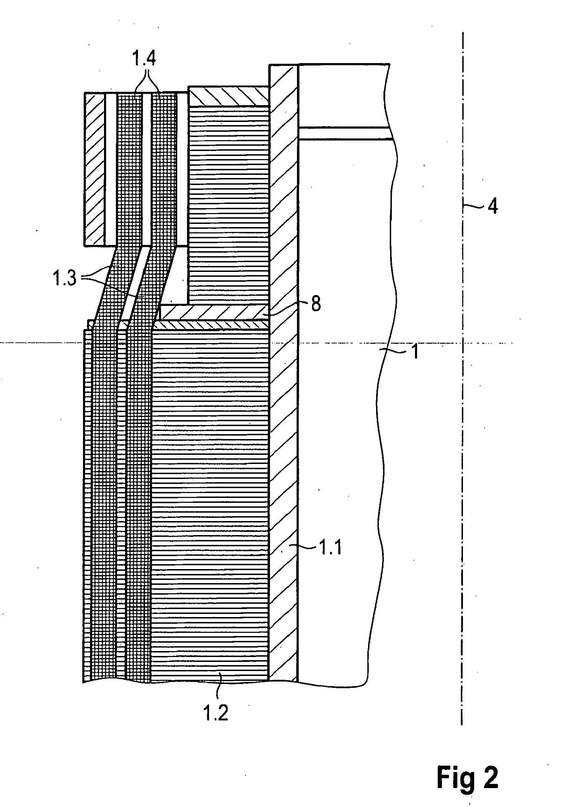

Der Generator gemäß Figur 2 weist einen Rotor 1 auf. Eine Nabe 1.1 trägt ein Rotorblechpaket 1.2. Dieses ist mittels einer Druckplatte 8 axial verspannt. Die Nuten der Rotorbleche sind Wicklungen 1.3 eingelegt. Diese ragen mit axialen Mittelköpfen aus dem Rotorblechpaket 1.2 heraus. Die Nabe 1.1 trägt an ihrem axialen Ende - in der Darstellung oben - Wickelköpfe 1.4. Der Rotor 1 läuft um die Drehachse 4.

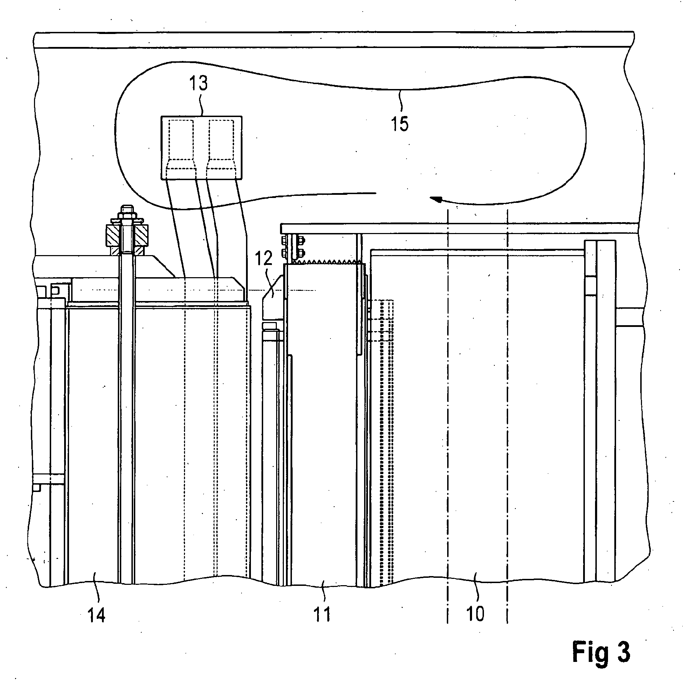

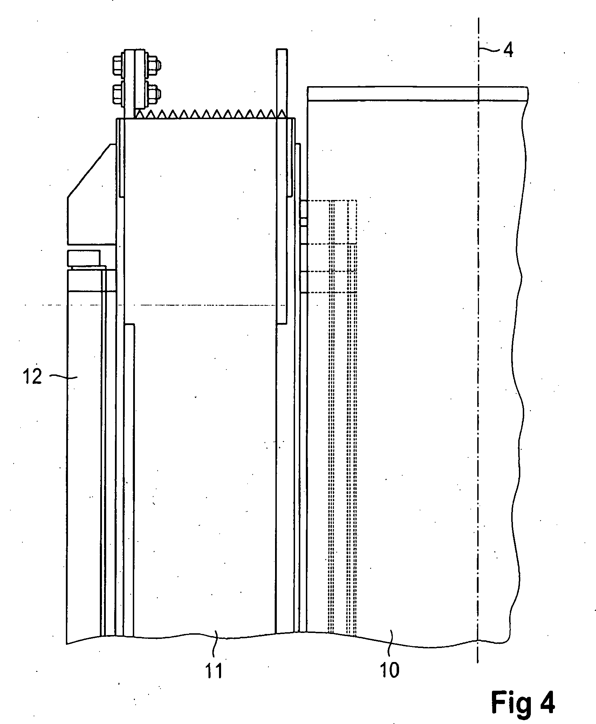

Die in den Figuren 3 und 4 gezeigten Generatoren sind Schenkelpolmaschinen.

In Figur 3 erkennt man eine Blechkette 10, die Polwicklung 11, den Polschuh 12, den Wickelkopf 13 sowie den Stator 14.

An den stirnseitigen Enden von Blechkette 10 und Stator 14 findet eine Luftströmung in Gestalt eines Wirbels 15 statt.

### Bezugszeichenliste

- 1: Rotor
- 1.1: Nabe
- 1.2: Rotorblechpaket
- 1.3: Wicklungen
- 1.4: Wickelköpfe
- 2: Stator
- 3: Gehäuse
- 4: Drehachse
- 5.1: Wassereinlass
- 5.2: Wasserauslass
- 6: Luftspalt
- 7: Bremse
- 8: Druckplatte
- 8.1: Druckplatte
- 8.2: Druckplatte
- 10: Blechkette
- 11: Polwicklung
- 12: Polschuh
- 13: Wickelkopf
- 14: Stator
- 15: Wirbel

## Patentansprüche

1. Elektrischer Generator, umfassend
1.1 einen Rotor (1);
1.2 einen den Rotor (1) umgebenden Stator (2);
1.3 ein Gehäuse (3);
1.4 eine wasserbetriebene Kühleinrichtung, umfassend einen Wassereinlass (5.1) und einen Wasserauslass (5.2) sowie Kanäle in Rotor (1) und Stator (2) zum Hindurchleiten von Kühlwasser;
1.5 das Gehäuse (3) ist im Wesentlichen geschlossen;
1.6 die wasserbetriebene Kühleinrichtung ist die einzige Kühleinrichtung des Generators;
**gekennzeichnet durch** die folgenden Merkmale:
1.7 das Gehäuse (3) weist jeweils einen Lufteinlass und einen Lufitauslass auf;
1.8 wenigstens einer dieser beiden hat eine einstellbare Öffnungsweite, sodass eine definierte Luft-Leckage erzielbar ist.

## Claims

1. An electric generator, comprising
1.1 a rotor (1);
1.2 a stator (2) enclosing the rotor (1);
1.3 a housing (3);
1.4 a water-operated cooling device, comprising a water inlet (5.1) and a water outlet (5.2) and channels in the rotor (1) and stator (2) for guiding cooling water through the same;
1.5 the housing (3) essentially is enclosed;
1.6 the water-operated cooling device is the only cooling device of the generator;
**characterized by** the following features:
1.7 the housing (3) comprises one respective air inlet and air outlet;
1.8 at least one of these two has an adjustable opening with, such that a defined air leakage may be obtained.

## Revendications

1. Générateur électrique, comprenant :
1.1 un rotor (1) ;
1.2 un stator (2) enveloppant le rotor (1) ;
1.3 un logement (3) ;
1.4 un système de refroidissement par eau, comprenant une entrée d'eau (5.1) et une sortie d'eau (5.2) ainsi que des canaux présents dans le rotor (1) et le stator (2) pour faire passer de l'eau de refroidissement ;
1.5 le logement (1) étant essentiellement fermé ;
1.6 le système de refroidissement étant la seule dispositif de refroidissement du générateur ;
**caractérisé en ce que**
1.7 le logement (3) comporte chacun une entrée d'air et une sortie d'air ;
1.8 au moins l'une de ceux-ci présente une largeur d'ouverture ajustable, pour obtenir une fuite d'air définie.
